# EUROPEAN PATENT SPECIFICATION

(11) **EP 1 975 566 B1**
(45) Date of publication and mention of the grant of the patent: **27.04.2016**
(21) Application number: 08152689.9
(22) Date of filing: 13.03.2008
(51) Int. Cl.: G01C 21/26, G01C 21/32

(54) **Navigation apparatus with control means for controlling a portable storage medium**
Navigationsvorrichtung mit Steuermitteln zur Steuerung eines tragbaren Speichermediums
Appareil de navigation avec moyens de contrôle pour contrôler un moyen de stockage portable

(30) Priority: 30.03.2007 JP 2007094367
(43) Date of publication of application: 01.10.2008
(73) Proprietor: Aisin AW Co., Ltd., Fujii-cho Anjo-shi, Aichi 444-1192 (JP)
(72) Inventor: Umemura, Tomoya, Okazaki-shi Aichi 444-8564 (JP); Takeuchi, Kensuke, Okazaki-shi Aichi 444-8564 (JP)
(74) Representative: Vossius & Partner Patentanwälte Rechtsanwälte mbB

(56) References cited:
- EP-A2- 1 098 172
- US-A1- 2006 224 315

## Description

Related technical fields include navigation apparatuses, and more particularly, navigation apparatuses that write information into a portable storage medium and read information from the portable storage medium.

Various navigation apparatuses that are capable of writing information into a portable storage medium and reading information from the portable storage medium have been proposed. For example, a navigation apparatus uses a rewritable portable storage medium such as a PC card and includes a memory driver for writing a set item which has been set in a program in an operating system into the portable storage medium, reading it out from the portable storage medium, and passing it to the said program. For example, JP-A-11-325948 (cols. 0010-0024, FIG. 1-4) discloses such a navigation apparatus.

According to the above structure, map data may be read out from a storage medium such as a CD-ROM, a set item necessary for executing navigation functions for a route search and/or route guidance may be written into a portable storage medium, and it may be read out from the portable storage medium. Consequently, as far as a user writes into the portable external storage medium the set item that the user has set, the user may receive the navigation functions according to the set item just by installing the portable external storage medium in a memory driver.

However, in the navigation apparatus described in JP-A-11-325948 above, a storage medium such as a CD-ROM storing map data has to be removed to listen to music or watch a movie with a CD, a DVD, and so forth during a maneuver. However, when the storage medium such as the CD-ROM is removed during the maneuver, the navigation apparatus cannot execute the navigation functions.

For the above problem, a structure may be proposed wherein map data in a predetermined range (a range of 500km in radius, for example) centering on a current position of an own vehicle (hereinafter, refer to "vehicle position") is read out from a storage medium such as a CD-ROM storing map data and written into a portable storage medium having a flash memory, and map data necessary for a route search and/or route guidance is read out from the portable storage medium.

However, when map data is written into a portable storage medium having a flash memory, the map data needs to be written on a data file basis of map data divided by a predetermined mesh (a range of approx. 10km x 10km, for example). For instance, when map data with a range of approximate 1,000km x 1,000km is written into the portable storage medium, the map data has to be written about 10,000 times by mesh of a range of approximate 10km x 10km. On the other hand, the upper limit of how many times the portable storage medium having the flash memory can write may be about a hundred thousand to a million times. Therefore, the upper limit of how many times map data can be written into the portable storage medium may be approximate 100 to 200 times.

Further, regarding map data, map data corresponding to one area is constructed with predetermined number of data files (100 data files, for example). Thus, when map data in a predetermined range centering on a specified geographic point is written into the portable storage medium, and if the map data of the outer part exceeds the maximum storage capacity, the map data in the predetermined area over the entire outer part will be deleted again, that is to say, clear data needs to be written into the portable storage medium again. Accordingly, the upper limit of how many times the map data can be written into the portable storage medium having the flash memory may be decreased to approximately several tens to a hundred times. Further, another problem may be that the copy right of the map data written into the portable storage medium needs to be protected.

EP 1098172 A2 and US 2006/224 315 A1 disclose a navigation system comprising map data storage means and writing reading means as in claim 1, and a map display device, respectively, according to the technological background.

Accordingly, various exemplary implementations of the broad principles described herein may provide a navigation apparatus capable of preventing the decrease of the upper limit of how many times the map data can be written into the portable storage medium having the flash memory, and at the same time, protecting the copy right of the map data.

The navigation apparatus according to the invention is defined in claim 1.

Thereby, just inputting the coordinates position of the central geographic point of the map data through the central coordinates inputting means makes it possible to extract the map data of the central sectional region centering on the central geographic point and the outer sectional region with the outside maximum range, which does not exceed the maximum storage capacity of the portable storage medium having the flash memory, and to write it into this portable storage medium automatically. Thus, it may surely prevent from deleting again the map data of the predetermined area over the entire outer part of the map data written into the portable storage medium and also prevent from decreasing the upper limit of how many times the portable storage medium can write.

The navigation apparatus according to claim 2, which is the navigation apparatus according to claim 1, comprises navigation identification information storage means for storing navigation identification information which identifies the navigation apparatus, central coordinates storage means for storing the coordinates position of the central geographic point, and storage medium identification information creating means for creating storage medium identification information including the navigation identification information and the coordinates position of the central geographic point, and the writing control means controls to write into the portable storage medium the map data of the map region to be stored associated with the storage medium identification information.

The navigation apparatus according to claim 2 creates the storage medium identification information including the navigation identification information stored in the navigation identification information storage means and the coordinates position of the central geographic point stored in the central coordinates storage means. Then, this storage medium identification information is written into the portable storage medium in association with the map data of the map region to be stored.

Thereby, what is needed is just to associate the navigation identification information and the coordinates position of the central geographic point of the map region to be stored with the map data of this map region to be stored; therefore, the increase of the number of times to write the map data into the portable storage medium may be prevented and the decrease of the upper limit of how many times the map data can be written into the portable storage medium may be prevented. In addition, writing the navigation identification information and the coordinates position of the central geographic point into the portable storage medium in association with the map data of this map region to be stored makes it possible to specify the navigation apparatus that wrote the map data into the portable storage medium and the coordinates position of the central geographic point of this written map data.

The navigation apparatus according to claim 3, which is the navigation apparatus according to claim 2, comprises identification information judgment means for reading out the storage medium identification information from the portable storage medium and for judging whether or not the storage medium identification information includes the navigation identification information stored by the navigation identification information storage means and the coordinates position of the central geographic point stored by the central coordinates storage means and reading control means for controlling to read the map data from the portable storage medium only when the storage medium identification information includes the navigation identification information stored by the navigation identification information storage means and the coordinates position of the central geographic point stored by the central coordinates storage means.

The navigation apparatus according to claim 3 reads out the storage medium identification information from the portable storage medium, and only when the storage medium identification information includes the navigation identification information stored in the navigation identification information storage means and the coordinates position of the central geographic point stored in the central coordinates storage means, the navigation apparatus reads out the map data from the portable storage medium.

Thereby, when the map data written into the portable storage medium is illegally duplicated and installed in writing-reading means of other navigation apparatus, the navigation identification information and the coordinates position of the central geographic point associated with this illegally duplicated map data are not stored in the navigation identification information storage means and the central coordinates storage means of the other navigation apparatus. Therefore, the said other navigation apparatus cannot read the map data stored in the portable storage medium. Accordingly, the duplication of the map data written into the portable storage medium may be controlled and the copyright of the map data written into the portable storage medium may be protected.

The navigation apparatus according to claim 4, which is the navigation apparatus according to claim 2 or 3, comprises date obtaining means for obtaining date on which the map data is written into the portable storage medium, and the central coordinates storage means stores the date corresponding to the coordinates position of the central geographic point and the storage medium identification information includes the date.

The navigation apparatus according to claim 4 obtains the date on which the map data is written into the portable storage medium and stores the date into the central coordinates storage means in association with the coordinates position of the central geographic point. In addition, the navigation apparatus creates the storage medium identification information including the navigation identification information stored in the navigation identification information storage means, the coordinates position of the central geographic point stored in the central coordinates storage means, and the date associated with the coordinates position of the central geographic point. Then, the storage medium identification information is written into the portable storage medium in association with the map data of the map region to be stored.

Thereby, what is needed is just to associate the navigation identification information, the coordinates position of the central geographic point of the map region to be stored, and the date on which the map data has been written into the portable storage medium with the map data of the map region to be stored; therefore, the increase of the number of times to write the map data into the portable storage medium may be prevented and the decrease of the upper limit of how many times the map data can be written into the portable storage medium may be prevented. In addition, writing the navigation identification information, coordinates position of the central geographic point, and the date into the portable storage medium in association with the map data of the map region to be stored makes it possible to specify the navigation apparatus which wrote the map data into the portable storage medium, the coordinates position of the central geographic point of this written map data, and the date on which the map data has been written into the portable storage medium.

In the navigation apparatus according to claim 5, which is the navigation apparatus according to claim 4, the reading control means controls to read the map data from the portable storage medium only when the storage medium identification information includes the navigation identification information stored by the navigation identification information storage means and the coordinates position of the central geographic point and the date stored by the central coordinates storage means.

The navigation apparatus according to claim 5 reads out the storage medium identification information from the portable storage medium, and only when the storage medium identification information includes the navigation identification information stored in the navigation identification information storage means, the coordinates position of the central geographic point stored in the central coordinates storage means, and the date stored in association with the coordinates position of the central geographic point, reads the map data from the portable storage medium.

Thereby, when the map data written into the portable storage medium is illegally duplicated and installed in writing-reading means of other navigation apparatus, the navigation identification information, the coordinates position of the central geographic point, and the date associated with the illegally duplicated map data are not stored in the navigation identification information storage means and the central coordinates storage means of the other navigation apparatus; therefore, the said other navigation apparatus cannot read the map data written in the portable storage medium. Accordingly, the duplication of the map data written into the portable storage medium may be further controlled and the copyright of the map data written into the portable storage medium may be protected.

Exemplary implementations will now be described with reference to the accompanying drawings, wherein:
FIG. 1 is a block diagram showing an exemplary navigation apparatus;
FIG. 2 is a flowchart showing exemplary processing executed by a CPU of the navigation apparatus for writing into a SD memory card map data in a predetermined range centering on a central geographic point which has been inputted through a liquid crystal display and/or an operator;
FIG. 3 is a diagram showing an exemplary map region to be stored and a maximum writable area in the SD memory card;
FIG. 4 is a sub-flowchart showing sub-processing of "processing of a usage permission of the SD memory card" executed by the CPU for judging the usage permission of the SD memory card installed in a card R/W; and
FIG. 5 is a sub-flowchart showing sub-processing of "processing of reading map data" executed by the CPU for reading in the map data from a CD-ROM or the SD memory card.

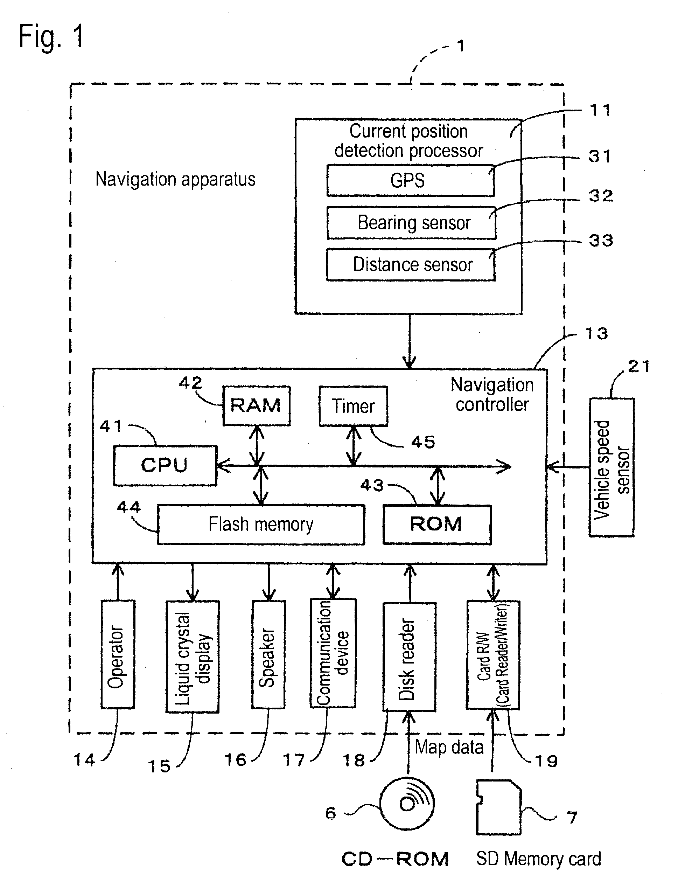

FIG. 1 is a block diagram showing an exemplary navigation apparatus 1 according to an example of the present invention. As shown in FIG. 1, the navigation apparatus 1 according to the example of the present invention includes a current position detection processor 11 for detecting a current position of an own vehicle, a navigation controller 13 for processing various computations based on inputted information, an operator 14 for accepting an operation from an operating person, a liquid crystal display 15 for displaying information such as a map to the operating person, a speaker 16 for outputting voice guidance regarding route guidance and so forth, a communication device 17 for communicating with Vehicle Information and Communication System Center (VICS as a registered trademark), map data delivery center (not shown in the diagrams) and/or the like via e.g., a portable phone network, a disk reader 18 for reading map data of a predetermined version recorded in e.g., prefecture unit from a CD-ROM 6 as a storage medium, and a card reader/writer (a card R/W) 19 for writing map data into a SD memory card 7 as an example of a portable storage medium having a flash memory and also for reading map data from the SD memory card 7. In addition, a vehicle speed sensor 21 for detecting a traveling speed of an own vehicle is connected to the navigation controller 13.

The CD-ROM 6 stores map data which is used for travel guidance or a route search in the navigation apparatus 1. The map data includes various information necessary for route guidance and a map display, for example, newly-built roads information for specifying each newly-built road, map display data for displaying a map, intersection data on each intersection, node data regarding a node point, link data regarding a road (a link) being as a type of facility, search data for searching for a route, store data regarding POI (Point of Interest) such as stores being as a type of facility, search data for searching for a geographic point, and so forth.

The map display data, in particular, consist of units that are divided into quarters (half length), 16 (quarter length), or 64 (1/8 length) on the basis of the secondary mesh divided by approximate 10 km x 10 km. A unit of each area is set to have about the same level in data volume. The smallest unit which was divided into 64 is approximate 1.25 km square size.

Each element constructing the navigation apparatus 1 will be described below. The current position detection processor 11 includes a GPS 31, a bearing sensor 32, a distance sensor 33, an altimeter (not shown in the diagrams), and so forth and is able to detect a current position and a bearing of an own vehicle, a distance to a target (an intersection, for example), and so forth.

More specifically, the GPS 31 detects the current position of the own vehicle on the earth and a current time by receiving radio waves generated from a satellite. The bearing sensor 32 includes a geomagnetic sensor, a gyro sensor, or an optical rotation sensor, a rotational resistance sensor installed at a rotation section of a steering wheel (not shown in the diagrams), an angular sensor installed at a wheel or the like to detect a bearing of the own vehicle. The distance sensor 33 includes, for example, a sensor that measures a rotational speed of a wheel (not shown in the diagrams) of the own vehicle and detects a distance on the basis of the measured rotational speed, a sensor that measures an acceleration and detects a distance by integrating the measured acceleration two times, and so forth, and the distance sensor 33 detects the travel distance of the own vehicle.

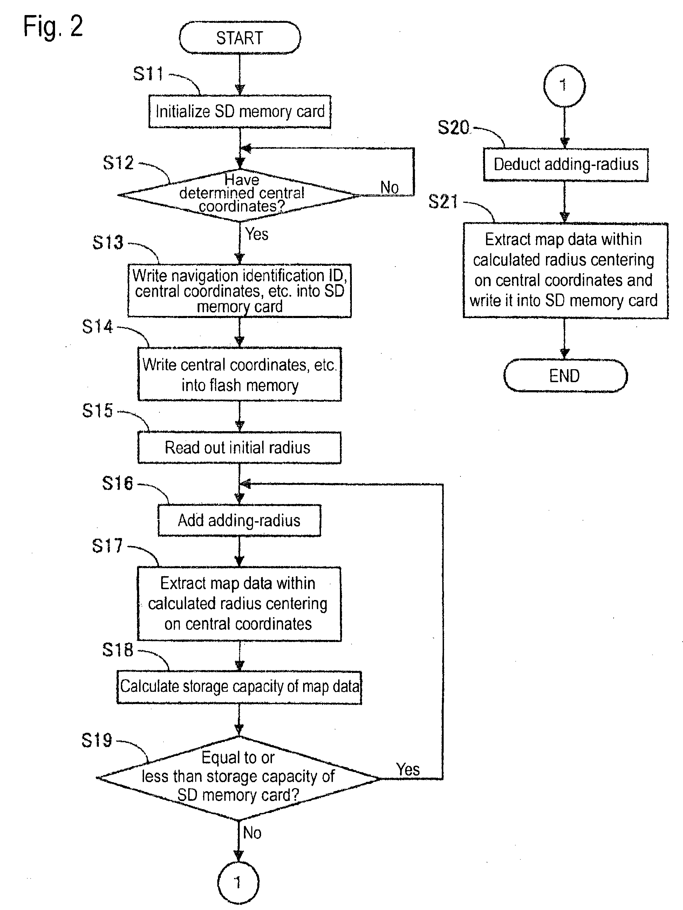

As shown in FIG. 1, the navigation controller 13 in the navigation apparatus 1 has internal memory devices, for example, a CPU 41 serving as a computation device and a control device to execute an entire control of the navigation apparatus 1, a RAM 42 serving as a working memory when the CPU 41 performs various computation processing and the RAM 42 for storing route data and so forth when a route is searched, a ROM 43 storing a control program and a processing program of writing map data (see FIG. 2) for writing the map data in a predetermine range centering on an inputted central geographic point into the SD memory card 7 (as described below), and a flash memory 44 storing a program read out from ROM 43, and the navigation controller 13 has a timer 45 for measuring time, and so forth. Note that a semiconductor memory, a magnetic core, or the like is used as the RAM 42, the ROM 43, and the flash memory 44. A MPU or the like may also be used instead of the CPU 41 as the computation device and the control device.

The above ROM 43 is supposed to store various programs. However, programs and/or map data can also be read out from the SD memory card 7 and write into the flash memory 44 through the card R/W 19. In addition, the programs, the map data, and so forth can be updated by exchanging the SD memory card 7.

Further, the navigation controller 13 is electrically connected to each of the peripheral devices (actuators) such as the operator 14, the liquid crystal display 15, the speaker 16, the communication device 17, the disk reader 18, and the card R/W 19.

The operator 14 is operated when a current position at the time of starting traveling is changed and a departure position as a guidance starting point and a destination as a guidance ending point are inputted or when information regarding a facility is searched, for example. The operator 14 includes various keys and/or plurality of operation switches. Subsequently, the navigation controller 13 controls to execute various corresponding operations on the basis of switch signals outputted by pressing each switch. Further, a touch panel is provided on the front surface of the liquid crystal display 15 and enables to input various instruction-commands by pressing a button shown on a screen or pressing on a map. It also enables to input a central geographic point of map data to write into the SD memory card 7 as described hereinafter. Note that a keyboard, a mouse, a bar-cord reader, a remote controller for commanding remotely, a joystick, a light pen, a stylus pen, and/or the like may be used as the operator 14.

The liquid crystal display 15 shows map data of a present travel, operation guidance, operation menus, keys guidance, a guided route from a current position to a destination, guidance information along the guided route, traffic information, news, whether forecast, time, mails, TV programs, and so forth.

The speaker 16 outputs, for example, voice guidance for guiding a travel motion along a guided route on the basis of an instruction from the navigation controller 13. The voice guidance herein includes "200 meters ahead, turn right at the XX intersection", "Press the central geographic point on the map to store into the memory card", and so forth.

The communication device 17 is communication means for communicating with a map data delivery center using a portable phone network or the like and transmits/receives the latest version of updated map data to/from the map data delivery center. Further, in addition to the map data delivery center, the communication device 17 receives traffic information such as a traffic congestion, a crowded situation of a rest area, and so forth which have been sent from Road Traffic Information Center or the like.

The disk reader 18 reads a predetermined version of map data stored in the installed DC-ROM 6. In addition, the disk reader 18 is able to read music data, image data, map data, and so forth stored in CD, DVD, DVD-ROM, or the like. The card R/W 19 writes map data and so forth into the SD memory card 7 and reads out map data and so forth from the SD memory card 7. Note that the SD memory card 7 is installed in the card R/W 19 in the present example, however, a miniature SD memory card, a micro SD memory card, or the like may also be used.

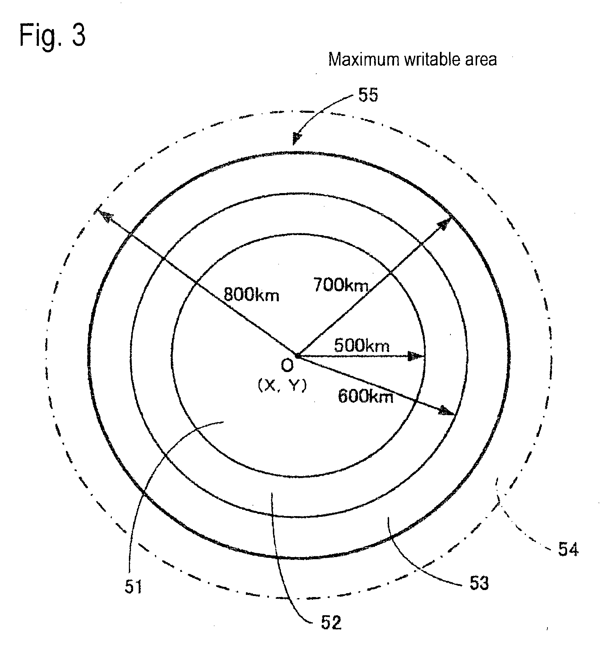

Next, processing of writing map data will be described with reference to FIG. 2 and FIG. 3. The processing of writing map data is executed by the CPU 41 in the navigation apparatus 1 constructed as above and writes map data in a predetermined range centering on a central geographic point which has been inputted through the liquid crystal display 15 and the operator 14 into the SD memory card 7.

FIG. 2 is a flowchart illustrating the processing executed by the CPU 41 in the navigation apparatus 1 according to the present example, which is the processing of writing the map data in the predetermined range centering on the central geographic point which has been inputted through the liquid crystal display 15 and the operator 14 into the SD memory card. FIG. 3 is a diagram showing an exemplary maximum writable area of map region which is to be stored into the SD memory card 7. Note that the program shown in the flowchart in FIG. 2 is stored in the ROM 43 provided in the navigation controller 13 in the navigation apparatus 1 and the program is executed by CPU 41.

As shown in FIG. 2, when an instruction is inputted through the operator 14 to write the map data into the SD memory card 7, the CPU 41 first initializes the SD memory card 7 installed in the card R/W 19 in step 11 (hereinafter abbreviate step as S). In addition, the CPU 41 specifies the maximum storage capacity of the SD memory card 7 via the card R/W 19 and stores it into RAM 42.

Subsequently, in S12, the CPU 41 stands by for an input of a coordinates position of a central geographic point of the map data to be written through the operator 14 and so forth (S12: NO). Note that the user can input the central geographic point of the map data to be written into the SD memory card 7 through the touch panel provided on the front surface of the liquid crystal display 15 by pressing on the map shown on the crystal liquid display 15. In addition, the central geographic point of the map data to be written into the SD memory card 7 can also be inputted directly by inputting the coordinates position (the latitude and the longitude, for example) of the central geographic point by operating number keys or cursor keys of the operator 14.

For example, as shown in FIG. 3, when the user presses a geographic point O on the map shown on the liquid crystal display 15, the CPU 41 stores into the RAM 42 the coordinates position (X, Y) of the geographic point O as the coordinates position of the central geographic point of the map data to be written into the SD memory card 7 through the touch panel provided on the front surface of the liquid crystal display 15.

Subsequently, as shown in FIG. 2, when the coordinates position of the central geographic point of the map data to be written has been inputted through the operator 14 or the like (512: YES), the CPU 41 stores the coordinates position of the central geographic point into RAM 42. In addition, the CPU 41 reads a current date from the timer 45 and stores it into the RAM 42 in association with the coordinates position of the central geographic point.

Subsequently, in S13, the CPU 41 reads out a navigation identification ID from the ROM 43 to distinguish between the navigation apparatus 1 and other navigation apparatuses. The CPU 41 also reads out the coordinates position of the central geographic point and the date associated with this coordinates position of the central geographic point from the RAM 42. Then, the CPU 41 writes the navigation identification ID, the coordinates position of the central geographic point, and the date into the SD memory card 7 as information of a storage medium identification.

In S14, the CPU 41 reads out the coordinates position of the central geographic point and the date associated with the coordinates position of the central geographic point from the RAM 42 again. Then, the CPU 41 stores the coordinates position of the central geographic point into the flash memory 44 and at the same time stores the date into the flash memory 44 in association with the coordinates position of the central geographic point.

In S15, the CPU 41 reads out from the ROM 43 an initial radius (approximate 500 kilometers, for example) of a central sectional region centering on the central geographic point. In addition, in S16, the CPU 41 reads out from the ROM 43 an adding-radius (approximate 100 kilometers, for example) indicating a predetermined distance range of an outer sectional region surrounding the outside of the central sectional region. Then, the CPU 41 adds the adding-radius to the initial radius and stores it into the RAM 42 as a calculated radius.

Subsequently, in S17, the CPU 41 reads out the coordinates position of the central geographic point and the calculated radius from the RAM 42 and sets the area within the calculated radius centering on the coordinates position of the central geographic point as map data extracting-region. Then, the CPU 41 reads out map data of each of secondary mesh in the map data extracting-region sequentially from the CD-ROM 6 through the disk reader 18 and stores it into the RAM 42.

For example, as shown in FIG. 3, when the CPU 41 has read out from the ROM 43 the initial radius 500 kilometers of the central sectional region 51 centering on the central geographic point O and the adding-radius 100 kilometers indicating the predetermined distance range of the outer sectional region 52 outside of the central sectional region 51, the range of the radius 600 kilometers that the adding-radius 100 kilometers has been added to the initial radius 500 kilometers is set as the map data extracting-region. That is to say, the range where the outer sectional region 52 has been added to the central sectional region 51 is set as the map data extracting-region, and the map data of each of the secondary mesh in the map data extracting-region is read out sequentially from the CD-ROM 6 through the disk reader 18 and stored into the RAM 42.

As shown in FIG. 2, in S18, the CPU 41 calculates storage capacity of the map data in the map data extracting-region stored in the RAM 42 and stores it into RAM 42. Then, in S19, the CPU 41 reads out the storage capacity of the map data in the map data extracting-region and the maximum storage capacity of the SD memory card 7 from the RAM 12, and then executes a judgment processing of whether or not the storage capacity of the map data in the map data extracting-region is equal to or less than the maximum storage capacity of the SD memory card 7.

In the case that the storage capacity of the map data in the map data extracting-region is equal to or less than the maximum storage capacity of the SD memory card 7 (S19: YES), the CPU 41 proceeds to the processing of S16. In S16, the adding-radius (approximate 100 meters, for example) is read out from the ROM 43, and the adding-radius is added to the calculated radius and stored into the RAM 42 as a new calculated radius. Then the processing of S17 and later is executed.

For example, as shown in FIG. 3, when the range where the outer sectional region 52 is added to the central sectional region 51 is set as the map data extracting-region and the storage capacity of the map data in the map data extracting-region is equal to or less than the maximum storage capacity of the SD memory card 7 (S19: YES), the CPU 41 sets the range with the radius 700 kilometers which the adding-radius 100 kilometers has been added to the calculated radius 600 kilometers of the map data extracting-region as the map data extracting-region. That is to say, the radius 700 kilometers in which the adding-radius 100 kilometers has been added to the calculated radius 600 kilometers of the map data extracting-region is stored into the RAM 42 as a new calculated radius. Then the processing of S17 and later is executed again.

On the other hand, when the storage capacity of the map data in the map data extracting-region has exceeded the maximum storage capacity of the SD memory card 7 (S19: NO), the CPU 41 proceeds to the processing of S20. In S20, the CPU 41 reads out the calculated radius from the RAM 42 and at the same time reads out the adding-radius (approximate 100 kilometers, for example) from the ROM 43, deducts the adding-radius from the calculated radius, and stores it into the RAM 42 as a calculated radius of the map region to be stored, that is, the maximum writable area for the map data in the SD memory card 7.

Subsequently, in S21, the CPU 41 reads out the coordinates position of the central geographic point and the calculated radius of the map region to be stored from the RAM 42 and sets the area of the calculated radius centering on the coordinates position of the central geographic point as the map region to be stored. Then, the map data of each secondary mesh in the map region to be stored is sequentially read out from the CD-ROM 6 through the disk reader 18 and sequentially written into the SD memory card 7, and then the processing will be terminated.

As shown in FIG. 3, for example, the range wherein the each region of the outer section 52, 53, and 54 has been added to the central sectional region 51 is set as the map data extracting-region, that is, the range of the calculated radius 800 kilometers centering on the central geographic point O is set as the map data extracting-region. Subsequently, in the case that the storage capacity of the map data in the map data extracting-region has exceeded the maximum storage capacity of the SD memory card 7 (S19: NO), the CPU 41 sets the range of the calculated radius 700 kilometers which the adding-radius 100 kilometers has been deducted from the calculated radius 800 kilometers, that is, the range wherein the each region of the outer section 52 and 53 has been added to the central sectional region 51 is set as map region to be stored 55 which is the maximum writable area for the map data in the SD memory card 7. Then the map data of each secondary mesh in the map region to be stored 55 is sequentially read out from the CD-ROM 6 through the disk reader 18 and sequentially written into the SD memory card 7, and then the processing will be terminated. (S20 to S21)

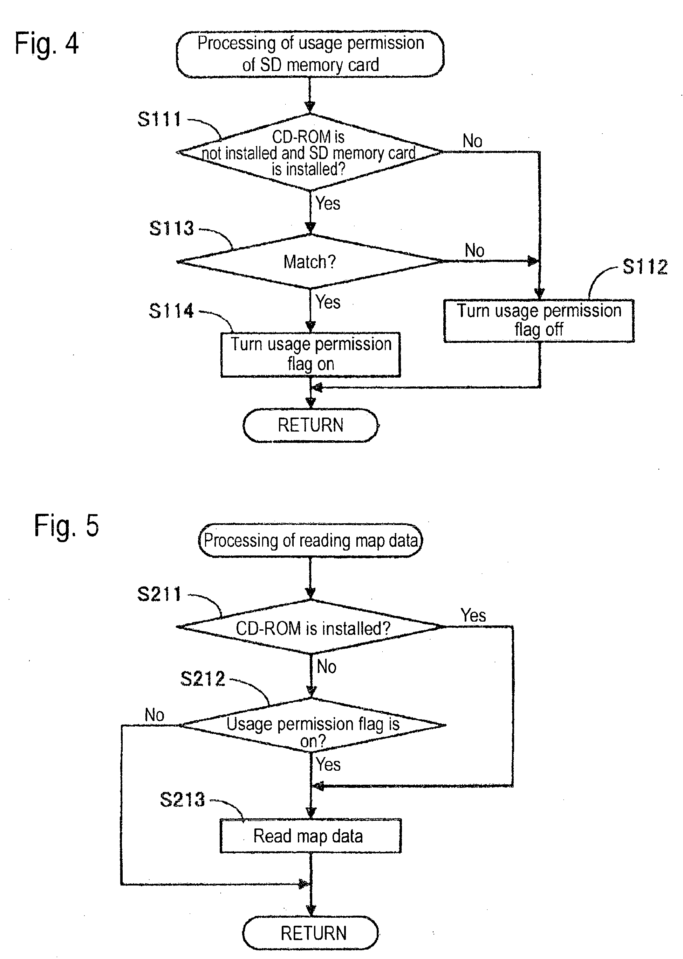

Next, sub-processing of "processing of a usage permission of the SD memory card' executed by the CPU 41 for judging a usage permission of the SD memory card 7 installed in the card R/W 19 will be described with reference to FIG. 4. FIG. 4 is a sub-flowchart illustrating the sub-processing of "the processing of a usage permission of the SD memory card" executed by the CPU 41 for judging a usage permission of the SD memory card 7 installed in the card R/W 19. Note that the sub-processing program shown in FIG. 4 is executed by the CPU 41 at regular time intervals (every 10m sec. to 100m sec. , for example) . In addition, the program shown in the flowchart in FIG. 4 is stored in the ROM 43 provided in the navigation controller 13 of the navigation apparatus 1.

As shown in FIG. 4, in S111, the CPU 41 executes processing of judgment whether or not the CD-ROM 6 is not installed in the disk reader 18 and the SD memory card 7 is installed in the card R/W 19. When the CD-ROM 6 is installed in the disk reader 18 or neither the CD-ROM 6 nor SD memory card 7 is installed (S111: No), the CPU 41 proceeds to processing of S112. In S112, the CPU 41 reads out from the RAM 42 a usage permission flag for permitting to use the SD memory card 7, sets the usage permission flag OFF, stores it into the RAM 42 again, and terminates the sub-processing and returns to the main flowchart. Note that, at the time of start-up or reset of the navigation apparatus 1, the usage permission flag is set OFF and stored in the RAM 42.

On the other hand, when the CD-ROM 6 is not installed in the disk reader 18 and the SD memory card 7 is installed in the card R/W 19 (S111: YES), the CPU 41 proceeds to processing of S113. In S113, the CPU 41 reads out from the SD memory card 7 the navigation identification ID, the coordinates position of the central geographic point, and the date as storage medium identification information through the card R/W 19. Then, the CPU 41 executes processing of judgment whether or not the navigation identification ID which has been read out from the SD memory card 7 matches the navigation identification ID stored in the ROM 43, and also the coordinates position of the central geographic point and the date which have been read out from the SD memory card 7 match the coordinates position of the central geographic point stored in the flash memory 44 and the date stored in the flash memory 44 in association with the coordinates position of the central geographic point.

Subsequently, when any one from the navigation identification ID, the coordinates position of the central geographic point, and the date which have been read out from the SD memory card 7 does not match the navigation identification ID stored in the ROM 43, the coordinates position of the central geographic point stored in the flash memory 44, and the date stored in the flash memory 44 in association with the coordinates position of the central geographic point (S113: NO), the CPU 41 proceeds to processing of S112. In S112, the CPU 41 reads out the usage permission flag for permitting to use the SD memory card 7 from the RAM 42, sets the usage permission flag OFF, stores it into the RAM 42 again, and terminates the sub-processing and returns to the main flowchart.

On the other hand, when the navigation identification ID which has been read out from the SD memory card 7 matches the navigation identification ID stored in the ROM 43 and also the coordinates position of the central geographic point and the date which have been read out from the SD memory card 7 match the coordinates position of the central geographic point stored in the flash memory 44 and the date stored in the flash memory 44 in association with the coordinates position of the central geographic point (S113: YES), the CPU 41 proceeds to processing of S114.

In S114, the CPU 41 reads out the usage permission flag for permitting to use the SD memory card 7 from the RAM 42, sets the usage permission flag ON, stores it into the RAM 42 again, and terminates the sub-processing and returns to the main flowchart. Thereby, when the CD-ROM 6 is not installed in the disk reader 18 and the SD memory card 7 is installed in the card R/W 19, further, only when the navigation identification 1D which has been read out from the SD memory card 7 matches the navigation identification ID stored in the ROM 43 and the coordinates position of the central geographic point and the date which have been read out from this SD memory card 7 match the coordinates position of the central geographic point stored in the flash memory 44 and the date stored in the flash memory 44 in association with the coordinates position of the central geographic point, the usage permission flag permitting to use the SD memory card 7 is set ON, that is, the SD memory card 7 is permitted to use (S111 to S114).

Next, sub-processing of "processing of reading map data" executed by the CPU 41 for reading map data from the CD-ROM 6 or the SD memory card 7 will be described with reference to FIG. 5. FIG. 5 is a sub-flowchart illustrating the sub-processing of "processing of reading map data" executed by the CPU 41 for reading map data from the CD-ROM 6 or the SD memory card 7. Note that the sub-processing program shown in FIG. 5 is executed by the CPU 41 at regular time intervals (every 10m sec. to 100m sec., for example). In addition, the program shown in the flowchart in FIG. 5 is stored in the ROM 43 included in the navigation controller 13 of the navigation apparatus 1.

As shown in FIG. 5, in S211, the CPU 41 executes processing of judgment whether or not the CD-ROM 6 has been installed in the disk reader 18. When the CD-ROM 6 has been installed in the disk reader 18 (S211: YES), the CPU 41 proceeds to processing of S213. In S213, the CPU 41 reads the map data from the CD-ROM 6 through the disk reader 18, stores it into the RAM 42, and terminates the sub-processing and returns to the main flowchart. Thereby, the map data can be set to be read from the CD-ROM 6 by giving priority to the CD-ROM 6 than the SD memory card 7.

On the other hand, when the CD-ROM 6 is not installed in the disk reader 18 (S211: NO), the CPU 41 proceeds to processing of S212. In S212, the CPU 41 reads out the usage permission flag from the RAM 42 and executes the processing of judgment whether or not the usage permission flag is set ON, that is, the SD memory card 7 is permitted to use. When the usage permission flag read out from the RAM 42 is set OFF (S212: NO), the CPU 41 terminates the sub-processing and returns to the main flowchart.

Further, on the other hand, when the usage permission flag read out from the RAM 42 is set ON (S212: YES), the CPU 41 proceeds to processing of S213. In S213, the CPU 41 reads out the map data from the SD memory card 7 through the card R/W 19, stores it into the RAM 42, and terminates the sub-processing and returns to the main flowchart. Thereby, when the CD-ROM 6 is not installed in the disk reader 18, the CPU 41 can execute a route search and rouge guidance on the basis of the map data read out from the SD memory card 7. In addition, by removing the CD-ROM 6 from the disk reader 18 and installing the SD memory card 7 in the card R/W 19, a user can install a CD or a DVD in this disk reader 18 to play music or movie.

Accordingly, in the navigation apparatus 1 in the present example, when the instruction for writing the map data into the SD memory card 7 including a flash memory has been inputted through the operator 14, the SD memory card 7 installed in the card R/W 19 is initialized and the maximum storage capacity of this SD memory card 7 is specified and stored into the RAM 42 (S11). When the coordinates position of the central geographic point of the map data to be written has been inputted through the operator 14 and so forth, the CPU 41 writes the navigation identification ID, the coordinates position of the central geographic point, and the date as the storage medium identification information into the SD memory card 7 and at the same time stores the coordinates position of the central geographic point and the date into the flash memory 44 (S12 to S14). Thereafter, the CPU 41 reads out the initial radius and the adding-radius from the ROM 43, calculates the calculated radius by sequentially adding the adding-radius to the initial radius, sets the area within the calculated radius centering on the coordinates position of the central geographic point as the map data extracting-region, sequentially reads out the map data of each of the secondary mesh in this map data extracting-region from the CD-ROM 6 through the disk reader 18, and stores it into the RAM 42. Then, when the storage capacity of the map data in the map data extracting-region exceeds the maximum storage capacity of the SD memory card 7, the CPU 41 deducts the adding-radius from the calculated radius and stores it into the RAM 42 as the calculated radius of the map region to be stored, that is, the maximum writable area of the map data in the SD memory card 7. Then, the area within the calculated radius centering on the coordinates position of the central geographic point is set as the map region to be stored. The map data of each of the secondary mesh in the map region to be stored is sequentially read out from the CD-ROM 6 through the disk reader 18 and sequentially written into the SD memory card 7 (S15 to S21).

Thereby, just by inputting the coordinates position of the central geographic point of the map data through the operator 14, the map data of the central sectional region centering on the central geographic point and the map data of the outer sectional region of the outside maximum range, which does not exceed the maximum storage capacity of the SD memory card 7 having the flash memory, can be extracted and automatically written into the SD memory card 7. Thus, it can surely be prevented that the map data in a predetermined area is deleted again throughout the entire outer circumference of the outer part of the map data which has been written into the SD memory card 7. Further, the decrease of the upper limit of how many times the SD memory card 7 can be written may be prevented.

In addition, when the coordinates position of the central geographic point of the map data to be written has been inputted through the operator 14, the CPU 41 writes the navigation identification ID, the coordinates position of the central geographic point, and the date as the storage medium identification information into the SD memory card 7 and at the same time stores the coordinates position of the central geographic point and the date into the flash memory 44 (S12 to S14).

Thereby, what is necessary is that the navigation identification information, the coordinates position of the central geographic point, and the date on which the map data has been written into the SD memory card 7 get associated with the map data of the map region to be stored. That may prevent from increasing the number of times of writing the map data into the SD memory card 7 and may prevent from decreasing the upper limit of the number of times that the map data is written into the SD memory card 7. In addition, by writing the navigation identification information, the coordinates position of the central geographic point, and the date into the SD memory card 7 in association with the map data of the map region to be stored, it may become possible to specify the navigation apparatus 1 which has written the map data into the SD memory card 7, the coordinates position of the central geographic point of the written map data, and the date on which the map data has been written into the SD memory card 7.

In addition, only when the navigation identification ID which has been read out from the SD memory card 7 matches the navigation identification ID stored in the ROM 43 and when the coordinates position of the central geographic point and the date which have been read out from the SD memory card 7 match the coordinates position of the central geographic point stored in the flash memory 44 and the date stored in the flash memory 44 in association with the coordinates position of the central geographic point, the usage permission flag is set ON (S113: YES to S114). Further, when the usage permission flag is set ON, the CPU 41 reads the map data from the SD memory card 7 (S212: YES to S213) .

Thereby, when the map data written in the SD memory card 7 has been illegally duplicated and installed in the card R/W 19 in other navigation apparatus, the navigation identification information, the coordinates position of the central geographic point, and the date associated with the map data which has been illegally duplicated are not stored in the ROM 43 and the flash memory 44 in other navigation apparatus; therefore, the said other navigation apparatus cannot read the map data written in the SD memory card 7. Accordingly, it may be possible to control the duplication of the map data written in the SD memory card 7 and protect the copyright of the map data written in the SD memory card 7.

Note that the present invention is not limited to the details of the example described above. Various alternatives, modifications, variations, and/or improvements of the above may be possible. Various changes may be made without departing from the broad spirit and scope of the underlying principles. For example, the above examples may be modified as below.

The central sectional region including the central geographic point may not be limited to a circle but may be a rectangle, an ellipse, and so forth.

In the above step 13, the CPU 41 may write the navigation identification ID and the coordinates position of the central geographic point as storage medium identification information into the SD memory card 7, and in step 14, the CPU 41 may store the coordinates position of the central geographic point into the flash memory 44.

In addition, in the above step 13, the CPU 41 may write the data in which not only the navigation identification ID, the coordinates position of the central geographic point, and the date but also a vehicle position, current time, location of home, and so forth are further associated with into the SD memory card 7 as storage medium identification information. Then, in step 14, not only the coordinates position of the central geographic point and the date but also the vehicle position, the current time, the location of home, and so forth may be stored into the flash memory 44.

Further, in the above step 14, the CPU 41 may store all the storage medium identification information which has been written into the SD memory card 7 into the flash memory 44 as well. Accordingly, the navigation identification ID may also be stored into the flash memory 44 together with the coordinates position of the central geographic point, and so forth.

In addition, in the above step 11, when the instruction for writing the map data into the SD memory card 7 has been inputted through the operator 14, the CPU 41 may read out "data of the number of writing" from the SD memory card 7 installed in the card R/W 19 and at the same time may read out "counter of the number of writing" from the RAM 42. Then, the CPU 41 may assign "the data of the number of writing" to "the counter of the number of writing" and store the said "the counter of the number of writing" into the RAM 42 again, and then initialize the SD memory card 7. In addition, the CPU 41 may specify the maximum storage capacity of the SD memory card 7 through the card R/W 19 and stores it into the RAM 42.

Note that "the data of the number of writing" which indicates how many times the map data has been written into the SD memory card 7 may be stored in the SD memory card 7 as described below. When "the data of the number of writhing" is not stored in the SD memory card 7, the CPU 41 may determine it is a first time of writing the map data and read out "the counter of the number of writing" from the RAM 42. Then the CPU 41 may assign "1" to "the counter of the number of writing", store "the counter of the number of writing" into the RAM 42 again, and initialize the SD memory card 7. At the time of start-up or reset of the navigation apparatus 1, "0" may be assigned to "the counter of the number of writing" and stored into the RAM 42.

Then, when the coordinates position of the central geographic point of the map data to be written has been inputted through the operator 14 (S12: YES), the CPU 41 may store the coordinates position of the central geographic point into the RAM 42. In addition, the CPU 41 may read out "the counter of the number of writing" from the RAM 42, may add "1" to "the counter of the number of writing", and may store "the counter of the number of writing" into the RAM 42 as "the data of the number of writing" corresponding to the coordinates position of the central geographic point.

Subsequently, in S13, the CPU 41 may read out from the ROM 43 the navigation identification ID distinguishing between the navigation apparatus 1 and the other navigation apparatuses. The CPU 41 may also read out from the RAM 42 the coordinates position of the central geographic point and "the data of the number of writing" corresponding to the coordinates position of the central geographic point. Then the CPU 41 may write into the SD memory card 7 the navigation identification ID, the coordinates position of the central geographic point, and "the data of the number of writing" as the storage medium identification information. Thereby, the CPU 41 may know how many times the map data has been written into the SD memory card 7 by reading out "the data of the number of writing" from the SD memory card 7.

In S14, the CPU 41 may read out from the RAM 42 the coordinates position of the central geographic point and "the data of the number of writing" corresponding to the coordinates position of the central geographic point again. Then, the CPU 41 may store the coordinates position of the central geographic point into the flash memory 44 and at the same time may store "the data of the number of writing" associated with the coordinates position of the central geographic point into the flash memory 44.

In the above S113, the CPU 41 may read out from the SD memory card 7 the navigation identification ID, the coordinates position of the central geographic point, and "the data of the number of writing" as the storage medium identification information through the card R/W 19 and may execute processing of judgment whether or not the navigation identification ID which has been read out from this SD memory card 7 matches the navigation identification ID stored in the ROM 43 and also whether or not the coordinates position of the central geographic point and "the data of the number of writing" which have been read out from the SD memory card 7 match the coordinates position of the central geographic point stored in the flash memory 44 and "the data of the number of writing" stored in the flash memory 44 in association with the coordinates position of the central geographic point.

If any one from the navigation identification ID, the coordinates position of the central geographic point, and "the data of the number of writing" which have been read out from the SD memory card 7 does not match the navigation identification ID stored in the ROM 43, the coordinates position of the central geographic point stored in the flash memory 44, and "the data of the number of writing" stored in the flash memory 44 in association with the coordinates position of the central geographic point (S113: NO), the CPU 41 may proceed to the processing of S112.

On the other hand, when the navigation identification ID which has been read out from the SD memory card 7 matches the navigation identification ID stored in the ROM 43 and also the coordinates position of the central geographic point and "the data of the number of writing" which have been read out from the SD memory card 7 match the coordinates position of the central geographic point stored in the flash memory 44 and "the data of the number of writing" stored in the flash memory 44 in association with the coordinates position of the central geographic point (S113: YES), the CPU 41 may proceed to the processing of S114.

In the above step 16, the adding-radius that is to be added to the calculated radius after the second time or later may be set to a bigger adding-radius in a predetermined ratio (approx. 10% to 20%, for example) than the adding-radius that has previously been added to the calculated radius. Thereby, the range of the outer sectional region sequentially becomes wider; therefore, the number of the repetitive processing from the above S16 to S19 may be decreased and the processing of writing the map data into the SD memory card 7 may become prompt.

In addition, in the above step 16, the adding-radius that is to be added to the calculated radius after the second time or later may be set to a smaller adding-radius in a predetermined ratio (approx. 10% to 20%, for example) than the adding-radius that has previously been added to the calculated radius. Thereby, the range of the outer sectional region sequentially becomes narrower; therefore, the SD memory card 7 may store as much the map data as possible.

## Claims

1. A navigation apparatus (1) comprising:
map data storage means (25) for storing map data;
writing-reading means (19) for writing the map data into a portable storage medium and for reading out the map data from the portable storage medium;
capacity detection means (13, 19) for detecting a maximum storage capacity of the portable storage medium;
central coordinates inputting means (14) for inputting a coordinates position of a central geographic point of the map data to be written into the portable storage medium;
sectional region setting means (13) for setting a central sectional region with a predetermined range centering on the central geographic point and sequentially setting at least one outer sectional region surrounding the outside of the central sectional region at a predetermined distance interval;
extracting-region creating means (13) for sequentially creating a map data extracting-region by sequentially adding the outer sectional regions or regions to the central sectional region;
capacity judgment means (13) for sequentially extracting map data of the map data extracting-region created by the extracting-region creating means from the map data storage means and for sequentially judging whether or not the storage capacity of the map data of the map data extracting-region is equal to or less than the maximum storage capacity;
storage region determination means (13) for determining the largest map data extracting-region which does not exceed the maximum storage capacity as map region to be stored in case the capacity judgment means (13) judged that the map data of the map data extracting-region has exceeded the maximum storage capacity; and
writing control means (13) for extracting the map data of the map region to be stored from the map data storage means and for controlling to write into the portable storage medium through the writing-reading means the map data of the map region to be stored.

2. The navigation apparatus according to claim 1, comprising:
navigation identification information storage means (43) for storing navigation identification information which identifies the navigation apparatus;
central coordinates storage means (13, 44) for storing the coordinates position of the central geographic point; and
storage medium identification information creating means (13) for creating storage medium identification information including the navigation identification information and the coordinates position of the central geographic point, wherein:
the writing control means (13) controls to write into the portable storage medium the map data of the map region to be stored associated with the storage medium identification information.

3. The navigation apparatus (1) according to claim 2, comprising:
identification information judgment means (13) for reading out the storage medium identification information from the portable storage medium and for judging whether or not the storage medium identification information includes the navigation identification information stored by the navigation identification information storage means and the coordinates position of the central geographic point stored by the central coordinates storage means; and
reading control means (13) for controlling to read the map data from the portable storage medium only when the storage medium identification information includes the navigation identification information stored by the navigation identification information storage means and the coordinates position of the central geographic point stored by the central coordinates storage means.

4. The navigation apparatus (1) according to claim 2 or 3, comprising:
date obtaining means (13, 45) for obtaining date on which the map data is written into the portable storage medium, wherein:
the central coordinates storage means (13, 44) stores the date corresponding to the coordinates position of the central geographic point and the storage medium identification information includes the date.

5. The navigation apparatus (1) according to claim 4 wherein the reading control means (13) controls to read the map data from the portable storage medium only when the storage medium identification information includes the navigation identification information stored by the navigation identification information storage means and the coordinates position of the central geographic point and the date stored by the central coordinates storage means.

## Patentansprüche

1. Navigationsvorrichtung (1) mit:
einer Kartendatenspeichereinrichtung (25) zum Speichern von Kartendaten;
einer Schreib-/Leseeinrichtung (19) zum Schreiben der Kartendaten in ein tragbares Speichermedium und zum Auslesen der Kartendaten vom tragbaren Speichermedium;
einer Kapazitäterfassungseinrichtung (13, 19) zum Erfassen einer maximalen Speicherkapazität des tragbaren Speichermediums;
einer Einrichtung (14) zum Eingeben zentraler Koordinaten zum Eingeben von Positionskoordinaten eines zentralen geografischen Punktes der in das tragbare Speichermedium zu schreibenden Kartendaten;
einer Teilbereichsetzeinrichtung (13) zum Setzen eines zentralen Teilbereichs mit einer vorgegebenen Reichweite mit dem zentralen geographischen Punkt als Mittelpunkt, und zum aufeinanderfolgenden Setzen mindestens eines äußeren Teilbereichs, der die Außenseite des zentralen Teilbereichs umgibt, in vorgegebenen Abstandsintervallen;
einer Extraktionsbereicherzeugungseinrichtung (13) zum sequentiellen Erzeugen eines Kartendatenextraktionsbereichs durch aufeinanderfolgendes Hinzufügen des äußeren Teilbereichs oder der äußeren Teilbereiche zum zentralen Teilbereich;
einer Kapazitätbeurteilungseinrichtung (13) zum sequentiellen Extrahieren von Kartendaten des durch die Extraktionsbereicherzeugungseinrichtung erzeugten Kartendatenextraktionsbereichs von der Kartendatenspeichereinrichtung und zum sequentiellen Entscheiden, ob die Speicherkapazität der Kartendaten des Kartendatenextraktionsbereichs kleiner oder gleich der maximalen Speicherkapazität ist oder nicht;
einer Speicherbereichbestimmungseinrichtung (13) zum Bestimmen des größten Kartendatenextraktionsbereichs, der die maximale Speicherkapazität nicht überschreitet, als zu speichernder Kartenbereich, falls die Kapazitätbeurteilungseinrichtung (13) entschieden hat, dass die Kartendaten des Kartendatenextraktionsbereichs die maximale Speicherkapazität überschritten haben; und
einer Schreibsteuerungseinrichtung (13) zum Extrahieren der zu speichernden Kartendaten des Kartenbereichs von der Kartendatenspeichereinrichtung und zum Steuern eines Schreibvorgangs zum Schreiben der zu speichernden Kartendaten des Speicherbereichs in das tragbare Speichermedium durch die Schreib-/Leseeinrichtung.

2. Navigationsvorrichtung nach Anspruch 1, mit:
einer Navigationsidentifizierungsinformationsspeichereinrichtung (43) zum Speichern von Navigationsidentifizierungsinformation, die die Navigationsvorrichtung identifiziert;
einer Einrichtung (13, 44) zum Speichern zentraler Koordinaten zum Speichern der Positionskoordinaten des zentralen geografischen Punktes; und
einer Speichermediumidentifizierungsinformationserzeugungseinrichtung (13) zum Erzeugen von Speichermediumidentifizierungsinformation, die die Navigationsidentifizierungsinformation und die Positionskoordinaten des zentralen geographischen Punkt enthält, wobei:
die Schreibsteuerungseinrichtung (13) den Schreibvorgang zum Schreiben der zu speichernden Kartendaten des Kartenbereichs in das tragbare Speichermedium in Zuordnung zur Speichermediumidentifizierungsinformation steuert.

3. Navigationsvorrichtung (1) nach Anspruch 2, mit:
einer Identifizierungsinformationsbeurteilungseinrichtung (13) zum Auslesen der Speichermediumidentifizierungsinformation vom tragbaren Speichermedium und zum Entscheiden, ob die Speichermediumidentifizierungsinformation die durch die Navigationsidentifizierungsinformationsspeichereinrichtung gespeicherte Navigationsidentifizierungsinformation und die durch die Einrichtung zum Speichern zentraler Koordinaten gespeicherten Positionskoordinaten des zentralen geografischen Punktes enthält; und
einer Lesesteuerungseinrichtung (13) zum Ausführen einer Steuerung, gemäß der die Kartendaten nur dann vom tragbaren Speichermedium gelesen werden, wenn die Speichermediumidentifizierungsinformation die durch die Navigationsidentifizierungsinformationsspeichereinrichtung gespeicherte Navigationsidentifizierungsinformation und die durch die Einrichtung zum Speichern zentraler Koordinaten gespeicherten Positionskoordinaten des zentralen geografischen Punkt enthält.

4. Navigationsvorrichtung (1) nach Anspruch 2 oder 3, mit:
einer Datumabrufeinrichtung (13, 45) zum Abrufen eines Datums, zu dem die Kartendaten in das tragbare Speichermedium geschrieben werden, wobei:
die Einrichtung (13, 44) zum Speichern zentraler Koordinaten das den Positionskoordinaten des zentralen geographischen Punktes zugeordnete Datum speichert, und wobei die Speichermediumidentifizierungsinformation das Datum enthält.

5. Navigationsvorrichtung (1) nach Anspruch 4, wobei die Lesesteuerungseinrichtung (13) eine Steuerung ausführt, gemäß der die Kartendaten nur dann vom tragbaren Speichermedium gelesen werden, wenn die Speichermediumidentifizierungsinformation die durch die Navigationsidentifizierungsinformationsspeichereinrichtung gespeicherte Navigationsidentifizierungsinformation und die Positionskoordinaten des zentralen geographischen Punkt und das Datum enthält, die durch die Einrichtung zum Speichern zentraler Koordinaten gespeichert wurden.

## Revendications

1. Appareil de navigation (1) comprenant :
des moyens de stockage de données cartographiques (25) pour stocker des données cartographiques ;
des moyens d'écriture-lecture (19) pour écrire les données cartographiques dans un support de stockage portable et pour sortir en lecture les données cartographiques du support de stockage portable ;
des moyens de détection de capacité (13, 19) pour détecter une capacité de stockage maximale du support de stockage portable ;
des moyens d'entrée de coordonnées centrales (14) pour entrer une position de coordonnées d'un point géographique central des données cartographiques devant être écrites dans le support de stockage portable ;
des moyens d'établissement de région sectionnelle (13) pour établir une région sectionnelle centrale avec une plage prédéterminée se centrant sur le point géographique central et établir séquentiellement au moins une région sectionnelle extérieure entourant l'extérieur de la région sectionnelle centrale à un intervalle de distance prédéterminé ;
des moyens de création de région d'extraction (13) pour créer séquentiellement une région d'extraction de données cartographiques en ajoutant séquentiellement la région ou les régions sectionnelles extérieures à la région sectionnelle centrale ;
des moyens de jugement de capacité (13) pour extraire séquentiellement des données cartographiques de la région d'extraction de données cartographiques créée par les moyens de création de région d'extraction des moyens de stockage de données cartographiques et pour juger séquentiellement si oui ou non la capacité de stockage des données cartographiques de la région d'extraction de données cartographiques est égale ou inférieure à la capacité de stockage maximale ;
des moyens de détermination de région de stockage (13) pour déterminer la plus grande région d'extraction de données cartographiques qui ne dépasse pas la capacité de stockage maximale comme région de carte à stocker dans le cas où les moyens de jugement de capacité (13) ont jugé que les données cartographiques de la région d'extraction de données cartographiques ont dépassé la capacité de stockage maximale ; et
des moyens de commande d'écriture (13) pour extraire les données cartographiques de la région de carte à stocker des moyens de stockage de données cartographiques et pour commander d'écrire dans le support de stockage portable par l'intermédiaire des moyens d'écriture-lecture les données cartographiques de la région de carte à stocker.

2. Appareil de navigation selon la revendication 1, comprenant :
des moyens de stockage d'informations d'identification de navigation (43) pour stocker des informations d'identification de navigation qui identifient l'appareil de navigation ;
des moyens de stockage de coordonnées centrales (13, 44) pour stocker la position de coordonnées du point géographique central ; et
des moyens de création d'informations d'identification de support de stockage (13) pour créer des informations d'identification de support de stockage incluant les informations d'identification de navigation et la position de coordonnées du point géographique central, où :
les moyens de commande d'écriture (13) commandent d'écrire dans le support de stockage portable les données cartographiques de la région de carte à stocker associées aux informations d'identification de support de stockage.

3. Appareil de navigation (1) selon la revendication 2, comprenant :
des moyens de jugement d'informations d'identification (13) pour sortir en lecture les informations d'identification de support de stockage du support de stockage portable et pour juger si oui ou non les informations d'identification de support de stockage incluent les informations d'identification de navigation stockées par les moyens de stockage d'informations d'identification de navigation et la position de coordonnées du point géographique central stockée par les moyens de stockage de coordonnées centrales ; et
des moyens de commande de lecture (13) pour commander de lire les données cartographiques à partir du support de stockage portable uniquement lorsque les informations d'identification de support de stockage incluent les informations d'identification de navigation stockées par les moyens de stockage d'informations d'identification de navigation et la position de coordonnées du point géographique central stockée par les moyens de stockage de coordonnées centrales.

4. Appareil de navigation (1) selon la revendication 2 ou 3, comprenant :
des moyens d'obtention de date (13, 45) pour obtenir une date à laquelle les données cartographiques sont écrites dans le support de stockage portable, où :
les moyens de stockage de coordonnées centrales (13, 44) stockent la date correspondant à la position de coordonnées du point géographique central et les informations d'identification de support de stockage incluent la date.

5. Appareil de navigation (1) selon la revendication 4, dans lequel les moyens de commande de lecture (13) commandent de lire les données cartographiques à partir du support de stockage portable uniquement lorsque les informations d'identification de support de stockage incluent les informations d'identification de navigation stockées par les moyens de stockage d'informations d'identification de navigation et la position de coordonnées du point géographique central et la date stockées par les moyens de stockage de coordonnées centrales.
